# EUROPEAN PATENT APPLICATION

(11) **EP 4 679 836 A1**
(43) Date of publication of application: **14.01.2026**
(21) Application number: 24382730.0
(22) Date of filing: 09.07.2024
(51) Int. Cl.: H04N 21/234, G06F 40/40, G09B 21/00, G10L 13/00, G10L 25/78

(54) **METHOD OF PROVIDING A DESCRIPTION FILE FOR AN AUDIOVISUAL ORIGINAL FILE**

(71) Applicant: García Crespo, Ángel, 28045 Madrid (ES); Matheus Chacín, Carlos Alberto, 28907 Getafe (ES); Fuenmayor González, Francisco Javier, 28911 Leganés (ES); Unuware, S.L., 28919 Leganés (ES)
(72) Inventor: GARCÍA CRESPO, Ángel, 28045 Madrid (ES); MATHEUS CHACÍN, Carlos Alberto, 28907 Getafe (ES); FUENMAYOR GONZÁLEZ, Francisco Javier, 28911 Leganés (ES)
(74) Representative: TRBL Intellectual Property

(57) **Abstract**

The present invention provides a method of providing a description file for an original file (1) with a video part (2) and an audio part (3). First step comprises obtaining and processing information about the characters of the video part (2) to obtain a character file (4) which comprises the name and an associated picture of each character. Then, processing the original file (1) to identify a plurality of gaps as portions with absence of speech, obtaining a gap video file (9), a start time (7), an end time (8) and a duration (11) for each gap. Then, sending each gap video file (9) with the character file (4) to a neural-based large language model (12) with instructions to deliver, for each gap, a descriptive text (13), wherein each descriptive text (13) contains the description of the gap video file (9) and makes reference to the name of the characters contained in the character file (14). Then, a descriptive audio file (15) is obtained for each descriptive text, and a global audio file (16) is generated with all the descriptive audio files (15).

## Description

### TECHNICAL FIELD

This invention belongs to the field of telecommunications, and more particularly, to the accessibility services provided by the same.

### STATE OF THE ART

Accessibility in audiovisual media has been highly improved with current technology. The possibility of adapting texts or providing an automated translation is now a reality. However, there are some aspects of accessibility which has not been deeply investigated.

In view of the above, there is a need in the field of an improved way of providing an audiodescription for an audiovisual file.

### DESCRIPTION OF THE INVENTION

The invention provides an alternative solution for improving the accessibility in an audiovisual file by means of a method according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method of providing a description file for an original file, the original file comprising an audio part and a video part, wherein the video part contains video information about a plurality of characters, the method comprising the following steps
a. obtaining information about the characters which appear in the video part of the original file;
b. processing the information about the characters to obtain a character file which comprises the name and an associated picture of each character;
c. processing the original file to identify a plurality of gaps, wherein each gap represents a portion of the video part with an absence of speech, further obtaining a gap video file, a start time, an end time and a duration for each gap;
d. sending each gap video file, the duration of each gap and the character file to a neural-based large language model, together with instructions to deliver, for each gap, a descriptive text, wherein each descriptive text contains the description of the content of the gap video file and makes reference to the name of the characters contained in the character file;
e. processing each descriptive text by applying text to speech techniques to obtain one descriptive audio file for each descriptive text, limited to the corresponding duration of the associated gap; and
f. generating a global audio file comprising all the descriptive audio files, wherein each descriptive audio file starts in the start time of the corresponding gap.

Steps a. and b. may be performed before, after or at the same time as step c., since they are related to independent actions.

Step a. involves the obtention of information about the characters which take part in the original file. The original file describes interaction between characters, and the step a. of the method finds a source of information to identify the characters.

Step b. involves the processing of the information of step a. to create a character file. The form of this character file may be diverse, but the aim is to identify a character with his or her name, so that this information may be used afterwards.

Step c. involves the identification of a plurality of gaps in a portion of the original file. These gaps are characterized by the absence of speech between the characters. These silences are to be filled by the description audio file that will be obtained at the end of this method. For each gap, the method obtains a gap video file (that will be used to elaborate the description), a start time (that will be used to locate the description inside the final audio file, so that the final audio file may be mounted together with the original file), an end time (that will be used together with the start time to obtain the duration of each gap) and the duration of each gap (obtained from the start time and the end time and that will be used to limit the duration of the corresponding descriptive speech, so that it matches within the gap).

Step d. involves the delivery of a request to a neural-based large language model, such an artificial intelligence using a large language model. This model is configured to produce a description of what is happening in the video portion corresponding to each gap. Further, the content of this description is limited in extension to the duration of the gap (so that the description matches within the gap) and is enriched with the character file, so that the large language model does not just identify a person, but refers to this person by his or her name (contained in the character file). The request contains instructions (e.g. a prompt) requesting to produce a descriptive text with the aforementioned conditions.

Step e. involves the process of each descriptive text by applying text to speech techniques to obtain one descriptive audio file for each descriptive text. This means the conversion of the adapted text to speech so that it may be inserted in the original file as an audio description.

Step f. involves the generation of this global audio file which comprises all the individual audio files, but as an audio file which matches with the original file: it includes each descriptive audio file in the start time of the corresponding gap: since each descriptive audio file is created from a text description and each text description corresponds to a gap, and each gap has its own start time, each descriptive audio file has its own corresponding start time, and this start time is used to mount the global audio file with all the description. This global audio file is suitable for being mounted with the original file, so that the result will be the original audio file but containing audio descriptions of the gaps where no dialogue is found between the characters.

In some particular embodiments, step a. comprises evaluating the video part of the original file and separate the characters from the background images.

An advantageous feature of the present invention is the identification of the characters in the audio description. This can be done in many different ways. This is due to the fact that each character is individually identified. Separating the characters from the background is a good way to obtain an image of the character that may be used in any other background of the video portion.

In some particular embodiments, step a. comprises obtaining information from an external server.

In some cases, when the original file is a film, some web pages may contain information about the characters and their names, so it is sometimes useful to use these sources of information.

In some particular embodiments, step c. is performed by analysing the audio portion of the original file by detecting frequency or volume or by using an artificial intelligence. In other particular embodiments, step c. is performed by obtaining information from an external server that provides data on the silence intervals in the original file.

The absence of speech may be detected by analysing the audio part. There are many different ways to do so.

In some particular embodiments, step d., the instructions comprise a reminder to associate each character with the name comprised in the character file.

A reminder is sometimes useful in a prompt to emphasize the importance of a particular feature. In this case, the association of each character with the name comprised in the character file is important since it means a good improvement for visually handicapped people in following the story.

In some particular embodiments, in step d., the instructions comprise information relative to predetermined actions or predetermined landscapes to help the computer neural network in the generation of the descriptive text.

In some particular embodiments, step c. includes the use of an artificial intelligence system that ensures the tone and content of the descriptive text are suitable for audio descriptions. In some particular embodiments, in step d. synthetic voices that sound natural are used for the narration of the descriptive text.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows some steps of a method according to the invention. In these steps, a video part and an audio part are obtained from the original film and a character file is obtained.
Figure 2 shows some steps of a method according to the invention. In these steps, a gap script is obtained with the start time and the end time of each gap.
Figure 3 shows some steps of a method according to the invention. In these steps, a narrative audio file is obtained for each gap.
Figure 4 shows some steps of a method according to the invention. In these steps, a synchronized global audio file is obtained and incorporated into the original film to create an adapted film with audio description.

In these figures, the following reference numbers have been used:
- 1: Film
- 2: Video part
- 3: Audio part
- 4: Character file
- 5: First AI
- 6: Gap script
- 7: Start time
- 8: End time
- 9: Gap video file
- 10: Main processor
- 11: Gap duration
- 12: Second AI
- 13: Descriptive text
- 14: Third AI
- 15: Descriptive audio file
- 16: Global audio file
- 100: Adapted film

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

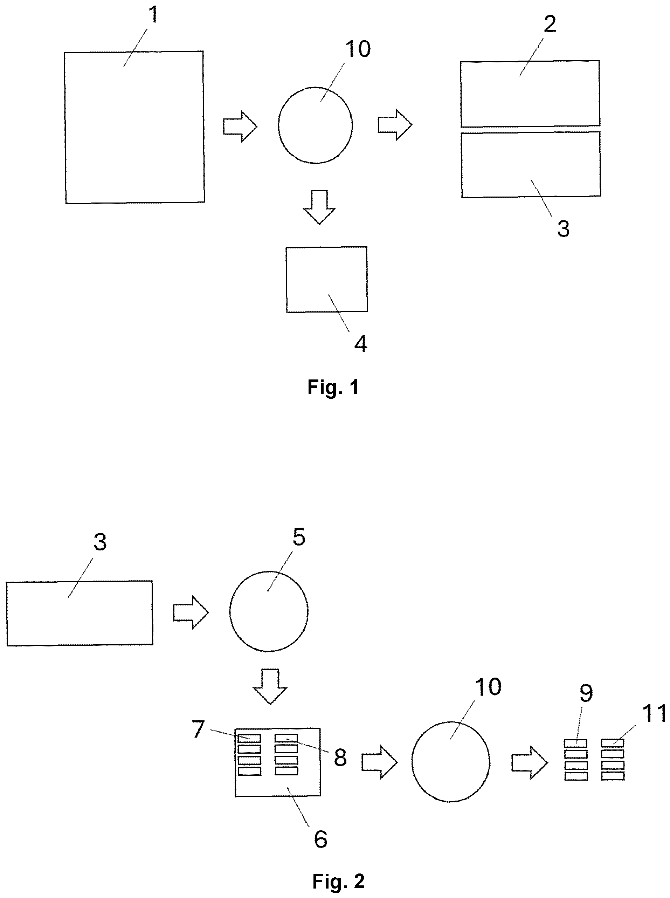

Figure 1 shows some steps of a method according to the invention.

The method of the invention is aimed to obtain an audio description file for an original file, which in this case is a film 1. This film 1 has a video part 2 and an audio part 3, which can be obtained from the film 1 by the main processor 10. In this film 1 there are some characters which take part in the same.

A first step of the method involves the obtention of information about the characters which take part in the film. The film describes interaction between characters, and this step of the method finds a source of information to identify the characters. In this case, an external server contains information about the film and about the characters, with images of each character. The main processor 10 processes this information to create a character file 4. The features of this character file 4 may be diverse, but the aim is to identify a character with his or her name, so that this information may be used afterwards.

However, in different embodiments, these steps may be carried out later on, since the character file 4 is not used until some steps later.

Figure 2 shows some steps of a method according to the invention.

In these steps, the audio part 3 of the film is sent to an artificial intelligence 5 to identify the exact moments where there is no dialogue, i.e., the intervals where an audio description can be inserted without interrupting conversations between characters.

The processing of this video file can be done in many different ways. In this case, it is done by an artificial intelligence, which generates a gap script 6. This gap script 6 is a file which comprises the start time 7 and the end time 8 of each gap. Hence, the main processor receives, with this information, the number of gaps and the start time and end time of each one. With this information, the main processor 10 provides, for each gap, a gap video file 9 and a gap duration 11.

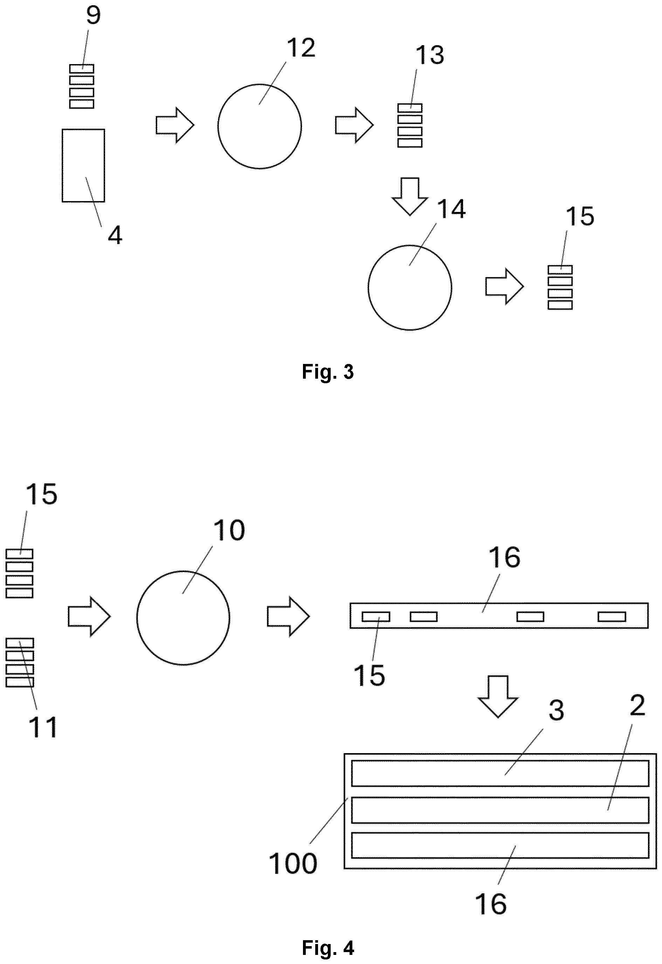

Figure 3 shows some steps of a method according to the invention.

In these steps, the main processor 10 sends each gap video file 9 to a second artificial intelligence 12, together with the character file 4 and a prompt which requires the creation of a descriptive text 13 for each gap video file 9. This descriptive text 13 should contain the relevant actions and scenes occurring in the corresponding gap video file, and each character should be named by the name contained in the character file. The second artificial intelligence 12 is requested to ensure that the tone and content of each descriptive text are appropriate for audio descriptions.

Next, the processor sends the descriptive texts to a third artificial intelligence 14, which is used to provide a descriptive audio file 15 for each descriptive text 13, by using synthetic voices that sound natural. The result is one descriptive audio file 15 for each descriptive text 13.

Figure 4 shows some steps of a method according to the invention.

Since each descriptive audio file 15 corresponds to one of the gap video file 9, and each gap video file had a start time and a duration, a synchronized global audio file 16 can be elaborated by creating a blank audio file which lasts the same as the audio part 3 of the original film and arranging each descriptive audio file 15 at the corresponding start time. This global audio file is therefore synchronized with the video part 2 and the audio part 3, and can be incorporated into the original film to create an adapted film with audio description 100.

## Claims

1. A method of providing a description file for an original file (1), the original file comprising a video part (2) and an audio part (3), wherein the video part (2) contains video information about a plurality of characters, the method comprising the following steps
a. obtaining information about the characters of the video part (2) of the original file (1);
b. processing the information about the characters to obtain a character file (4) which comprises the name and an associated picture of each character;
c. processing the original file (1) to identify a plurality of gaps, wherein each gap represents a portion of the video part (2) with an absence of speech, further obtaining a gap video file (9), a start time (7), an end time (8) and a duration (11) for each gap;
d. sending each gap video file (9), the duration (11) of each gap and the character file (4) to a neural-based large language model (12), together with instructions to deliver, for each gap, a descriptive text (13), wherein each descriptive text (13) contains the description of the content of the gap video file (9) and makes reference to the name of the characters contained in the character file (14);
e. processing each descriptive text by applying text to speech techniques to obtain one descriptive audio file (15) for each descriptive text, limited to the corresponding duration (11) of the associated gap; and
f. generating a global audio file (16) comprising all the descriptive audio files (15), wherein each descriptive audio file (15) starts in the start time (7) of the corresponding gap, wherein steps a. and b. may be performed before, after or at the same time as step c.

2. Method according to claim 1, wherein step a. comprises evaluating the video part of the original file and separate the characters from the background images.

3. Method according to any one of claims 1 to 2, wherein step a. comprises obtaining information from an external server.

4. Method according to any one of claims 1 to 3, wherein step c. is performed by analysing the audio portion of the original file by detecting frequency or volume or by using an artificial intelligence.

5. Method according to any one of claims 1 to 3, wherein step c. is performed by obtaining information from an external server that provides data on the silence intervals in the original file.

6. Method according to any one of claims 1 to 5, wherein step d., the instructions comprise a reminder to associate each character with the name comprised in the character file.

7. Method according to any one of claims 1 to 6, wherein in step d., the instructions comprise information relative to predetermined actions or predetermined landscapes to help the computer neural network in the generation of the descriptive text.

8. Method according to any one of claims 1 to 7, wherein step c. includes the use of an artificial intelligence system that ensures the tone and content of the descriptive text are suitable for audio descriptions.

9. Method according to any one of claims 1 to 8, wherein in step d. synthetic voices that sound natural are used for the narration of the descriptive text.
